# EUROPÄISCHE PATENTSCHRIFT

(11) **EP 1 826 956 B1**
(45) Veröffentlichungstag und Bekanntmachung des Hinweises auf die Patenterteilung: **02.07.2008**
(21) Anmeldenummer: 06110350.3
(22) Anmeldetag: 23.02.2006
(51) Int. Cl.: H04L 12/46

(54) **Anpassung von virtuellen und physikalischen Netzwerkschnittstellen**
Adaptation of virtual and physical network interfaces
Adaptation des interfaces virtuelles et physiques de réseau

(43) Veröffentlichungstag der Anmeldung: 29.08.2007
(73) Patentinhaber: Swisscom Mobile AG, 3050 Bern (CH)
(72) Erfinder: Heissenbütel, Marc, 3011 Bern (CH); Danzeisen, Marc, 3063 Ittigen (CH); Linder, Jan, 3013 Bern (CH); Aeschlimann, Felix, 3114 Wichtrach (CH)
(74) Vertreter: Scheuzger, Beat Otto

(56) Entgegenhaltungen:
- EP-A2- 1 271 896
- WO-A-20/04098130
- DE-A1- 19 845 486

## Beschreibung

### Technisches Gebiet

Die vorliegende Erfindung betrifft ein Verfahren und ein System für einen Kommunikationsknoten mit mehreren Netzwerkschnittstellen.

### Stand der Technik

Kommunikationsnetzwerke und Kommunikationsknoten für die Kommunikation über Kommunikationsnetzwerke werden in vielfältigsten Ausgestaltungen hergestellt, installiert und betrieben. Kommunikationsnetzwerke können sich beispielsweise auf Ethernet-Netzwerke, auf PSTN-Netzwerke (PSTN: Public Switched Telephone Network), auf Mobilfunknetzwerke wie GSM- oder UMTS-Mobilfunknetzwerke (GSM: Global System for Mobile Communications, UMTS: Universal Mobile Telecommunications System), auf drahtlose WLAN-Netzwerke (WLAN: Wireless Local Area Network), auf Funknetze, welche gemäss dem WiMAX-Standard (WiMAX: Worldwide Interoperability for Microwave Access) betrieben werden, auf Netzwerke, welche gemäss der UWB (UWB: Ultra Wide Band) Technologie betrieben werden, auf IP-Netzwerke (IP: Internet Protocol), auf ATM-Netzwerke (ATM: Asynchronous Transfer Mode) oder auf Bluetooth-Netzwerke beziehen. Selbstverständlich können in solchen Netzwerken verschiedenste Verfahren zur Datenübertragung, wie beispielsweise ein HSDPA-Verfahren (HSDPA: High Speed Downlink Packet Access) in einem UMTS-Netzwerk, verwendet werden. Ein Kommunikationsknoten kann sich beispielsweise auf einen festinstallierten Computer, auf ein Mobilfunkendgerät, auf ein Kommunikationsvermittlungsgerät wie einen Netzwerk-Router oder auf einen mobilen Computer wie ein Notebook beziehen. Bei der Kommunikation zwischen Kommunikationsknoten müssen eine Vielzahl verschiedenster Probleme wie beispielsweise Anforderungen an die Zuverlässigkeit, Geschwindigkeit, Sicherheit, Effizienz etc. gelöst werden. Es ist von Vorteil, diese Probleme beispielsweise gemäss dem Interconnection) oder gemäss dem TCP/IP-Referenzmodell zu strukturieren. Diese Referenzmodelle umfassen mehrere aufeinander aufbauende Schichten (OSI-Referenzmodell: 7 Schichten, TCP/IP-Referenzmodell: 4 Schichten), wobei jeder Schicht bestimmte Funktionen zugeordnet sind. Im OSI-Referenzmodell sind dies die 7 Schichten Bitübertragung (Layer 1, engl. Physical), Sicherung (Layer 2, engl. Data Link), Vermittlung (Layer 3, engl. Network), Transport (Layer 4, engl. Transport), Sitzung (Layer 5, engl. Session), Darstellung (Layer 6, engl. Presentation) und Anwendung (Layer 7, engl. Application). Im TCP/IP-Referenzmodell werden hingegen die 4 Schichten Netzzugang (OSI Layer 1-2, Bsp. Ethernet), Internet (OSI Layer 3, IPv4, IPv6), Transport (OSI Layer 4, TCP) und Anwendung (OSI Layer 5-7, Bsp. HTTP) definiert.

Ein Kommunikationsknoten verfügt jeweils über mindestens eine Netzwerkschnittstelle. Eine solche Netzwerkschnittstelle kann sich beispielsweise auf eine Ethernet-Schnittstelle zur Verbindung mit einem Ethernetnetzwerk, auf eine WLAN-Schnittstelle zur Verbindung mit einem WLAN-Netzwerk oder auf eine GSM-Schnittstelle zur Verbindung mit einem GSM-Mobilfunknetzwerk beziehen. Je nach Funktion des Kommunikationsknotens verfügt der Kommunikationsknoten über mehrere Netzwerkschnittstellen. So kann ein Netzwerk-Router über mehrere gleichartige Ethernet-Schnittstellen verfügen oder ein Notebook kann über eine Ethernet-Schnittstelle, über eine WLAN-Schnittstelle und über eine GSM-Schnittstelle verfügen. Insbesondere bei mobilen Kommunikaitionsknoten müssen die Netzwerkschnittstellen des Kommunikationsknotens ständig an verändernde Bedingungen angepasst werden. So kann beispielsweise ein Kommunikationsknoten bei privatem Gebrauch über ein PSTN-Netzwerk mit dem Internet verbunden werden, bei Gebrauch an einem öffentlichen Standort über ein public WLAN-Netzwerk mit dem Internet verbunden werden, bei Gebrauch in einem Zug über ein GSM-Mobilfunknetzwerk mit dem Internet verbunden werden und bei Gebrauch an einem Firmenarbeitsplatz über ein firmeneigenes Ethernet-Netzwerk mit dem Internet verbunden werden. Dabei müssen Netzwerkparameter wie beispielsweise die IP-Adresse des Dabei müssen Netzwerkparameter wie beispielsweise die IP-Adresse des Kommunikationsknotens für jeden dieser Standorte neu konfiguriert werden. Der Kommunikationsknoten erscheint im Internet deshalb insbesondere jeweils mit einer anderen IP-Adresse und es ist deshalb beispielsweise nicht möglich, nach einem Standortwechsel des mobilen Kommunikationsknotens von einem anderen Kommunikationsknoten auf den mobilen Kommunikationsknoten weiter zuzugreifen. Anschaulich wird diese Problematik bei einer VoIP (VoIP: Voice over IP) Verbindung zwischen einem ersten Kommunikationsknoten und einem mobilen Kommunikationsknoten. Bei einem Wechsel der Anbindung des mobilen Kommunikationsknotens beispielsweise von einem WLAN-Netzwerk auf ein Ethernet-Netzwerk wird dem mobilen Kommunikationsknoten eine neue IP-Adresse zugeteilt. Allerdings wird diese Zuteilung einer neuen IP-Adresse dem ersten Kommunikationsknoten nicht automatisch übermittelt, sodass der erste Kommunikationsknoten den mobilen Kommunikationsknoten danach nicht mehr weiter kontaktieren kann und beispielsweise eine bestehende VoIP abgebrochen werden muss.

Im Stand der Technik sind Lösungen, wie beispielsweise Mobile IP, Dynamisches DNS (DNS: Domain Name System) oder SIP (SIP: Session Initiation Protocol), bekannt, um die IP-Konnektivität von mobilen Kommunikationsknoten zu verbessern. So wurde von der IETF (IETF: Internet Engineering Task Force) im RFC 2002 (RFC: Request for Comment) das Mobile IP Protokoll definiert. Gemäss dem Mobile IP Protokoll wird dem mobilen Kommunikationsknoten eine ständig verfügbare Home-Adresse zugeteilt, welche auf einem ständig verfügbaren Netzwerkserver konfiguriert wird (der so genannte Home Agent). Dem Kommunikationsknoten wird bei einer Anbindung an ein Kommunikationsnetzwerk oder bei einem Wechsel zwischen Kommunikationsnetzwerken eine dynamische IP-Adresse zugeteilt. Diese dynamisch zugeteilte IP-Adresse wird bei Mobile IP als Care-of-Adresse bezeichnet. Die Care-of-Adresse wird anschliessend auf dem ständig verfügbaren Netzwerkserver der Home-Adresse zugeordnet. Diese Zuordnung erlaubt es, dass der mobile Kommunikationsknoten über einen Zugriff auf die Home-Adresse unabhängig vom aktuellen Standort immer kontaktiert werden kann, indem der ständig verfügbare Netzwerkserver Anfragen an die Home-Adresse auf die momentane Care-of-Adresse weiterleitet. Ein Nachteil des Mobile IP ist, dass die Zuteilung einer Care-of-Adresse und die anschliessende Zuordnung zwischen der Home-Adresse und der Care-of-Adresse auf dem Netzwerkserver relativ lange dauern können und deshalb eine Verbindung abbrechen kann. Ein weiterer Nachteil ist, dass bei einer vom mobilen Kommunikationsknoten ausgehenden Verbindung normalerweise mit der Care-of-Adresse gearbeitet wird und deshalb eine solche Verbindung nach einem Standortwechsel basierend auf einer neuen Care-of-Adresse neu erstellt werden muss.

Es wurde ebenfalls von der IETF der Internet Draft "Host Identity Protocol Architecture" definiert. Dieser Internet Draft ist aus der Problematik entstanden, dass einer IP-Adresse gleichzeitig zwei Funktionen zugeordnet sind. Mit einer IP-Adresse wird gleichzeitig ein Kommunikationsknoten (oder genauer eine Netzwerkschnittstelle des Kommunikationsknotens) identifiziert als auch der Standort dieses Kommunikationsknotens identifiziert. Die IP-Adresse ist ein dynamischer Identifier für ein Kommunikationsknoten und entspricht in der Topologie des Internets (basierend auf den IP-Adressen) einem "Standort". Das heisst, dass sich die IP-Adresse des Kommunikationsknoten ändert, wenn sich der Standort ändert. Die IP-Adresse wird aber gleichzeitig als statischer Identifier des Kommunikationsknotens gebraucht, welcher unabhängig von der Topologie ist. Mit der HIP Architektur (HIP: Host Identity Protocol) wird eine Trennung zwischen der Funktion einer IP-Adresse als Identifier eines Kommunikationsknotens und der Funktion einer IP-Adresse als Identifier des Standorts dieses Kommunikationsknotens ermöglicht. Dazu wird einem Kommunikationsknoten, welcher über eine Netzwerkschnittstelle und über eine IP-Adresse verfügt, ein Host Identifier zugeordnet. Der Host Identifier kann lokal auf dem Kommunikationsknoten als statistisch eindeutiger Name erzeugt werden, wobei aus dem Host Identifier mittels einer Hash Funktion ein Host Identity Tag von 128-bit Länge erzeugt wird. Dem Host Identity Tag wird die IP-Adresse der Netzwerkschnittstelle des Kommunikationsknotens zugeordnet. Die Transportschicht Protokolle wie TCP oder UDP werden anschliessend an Host Identities gebunden (statt an IP-Adressen), sodass Verbindungsanfragen zu einem Kommunikationsknoten immer über eine Host Identity erfolgen. Die Zuordnung eines Host Identity Tag zu einer IP-Adresse kann in speziellen, ständig verfügbaren Verzeichnissen, dem so genannten Rendezvous-Server, kontinuierlich nachgeführt werden. Ein Nachteil dieses Verfahrens ist es, dass keine Mechanismen vorgesehen sind, um eine dynamische Anbindung eines Kommunikationsknotens mit mehreren Netzwerkschnittstellen zu ermöglichen.

In der Europäischen Patentschrift EP 1 271 896 wird ein Verfahren für mobile IP-Nodes in heterogenen Netzwerken beschrieben, wobei eine dynamische IP-Care-of-Adresse einer IP-Home-Adresse eines mobilen Kommunikationsknotens zugeordnet wird, und wobei die IP-Care-of-Adresse den aktuellen Standort des mobilen Kommunikationsknotens angibt. Ein Schnittstellenverwaltungsmodul erstellt eine Lookup-Tabelle mit verfügbaren Netzwerkschnittstellen des Kommunikationsknotens. Applikationen greifen auf eine virtuelle IP-Netzwerkschnittstelle zu, wobei die virtuelle IP-Netzwerkschnittstelle über das Schnittstellenverwaltungsmodul mit einer Netzwerkschnittstelle verbunden ist, und wobei bei einem Wechsel der Netzwerkschnittstelle des mobilen Kommunikationsknotens die Anbindung der virtuellen IP-Netzwerkschnittstelle an eine Netzwerkschnittstelle mittels des Schnittstellenverwaltungsmoduls basierend auf der Lookup-Tabelle aktualisiert wird. Ein Nachteil dieses Verfahrens ist es, dass nur eine Mobile IP basierte Technologie verwendet werden kann und neue Technologien, wie beispielsweise das HIP, nicht angewendet werden können. Ein weiterer Nachteil dieses Verfahrens ist es, dass ein Resourcenmanagment für den Betreiber von Kommunikationsnetzwerken nur schwierig durchführbar ist.

### Darstellung der Erfindung

Es ist eine Aufgabe der vorliegenden Erfindung, ein neues Verfah-ren und ein neues System für einen Kommunikationsknoten mit mehreren Netzwerkschnittstellen vorzuschlagen, welche nicht die Nachteile des Standes der Technik aufweisen.

Gemäss der vorliegenden Erfindung werden diese Ziele insbeson-dere durch die Elemente der unabhängigen Ansprüche erreicht. Weitere vor-teilhafte Ausführungsformen gehen ausserdem aus den abhängigen Ansprü-chen und der Beschreibung hervor.

Insbesondere werden diese Ziele durch die Erfindung dadurch er-reicht, dass auf einem Kommunikationsknoten eine virtuelle Schnittstelle konfiguriert wird, wobei die virtuelle Schnittstelle von auf dem Kommunikationsknoten ausführbaren Applikationen zugreifbar ist, dass ein Konfigurationsmodul einen Identifikator generiert, welcher dem Kommunikationsknoten zugeordnet ist, wobei der Identifikator in einer Identifikatorentabelle abgespeichert wird, dass das Konfigurationsmodul den Kommunikationsknoten nach verfügbaren Netzwerkschnittstellen überprüft und eine Netzwerkschnittstellentabelle mit den verfügbaren Netzwerkschnittstellen erstellt, wobei von einer verfügbaren Netzwerkschnittstelle mindestens eine IP-Adresse in der Identifikatorentabelle dem Identifikator zugeordnet abgespeichert wird, und dass ein Anbindungsmodul basierend auf der Netzwerkschnittstellentabelle mindestens eine der verfügbaren Netzwerkschnittstellen an die virtuelle Schnittstelle anbindet. Eine verfügbare Netzwerkschnittstelle zeichnet sich insbesondere dadurch aus, dass auf dieser eine IP-Adresse konfiguriert ist und somit über eine IP-Konnektivität verfügt. Ein solches Verfahren hat insbesondere den Vorteil, dass Netzwerkschnittstellen des Kommunikationsknotens dynamisch zugeschaltet und abgeschaltet werden können. Ein solches Verfahren hat auch den Vorteil, dass dem Betreiber von Kommunikationsnetzwerken ein Resourcenmanagement ermöglicht wird. Ein solches Verfahren hat weiter den Vorteil, dass ein Powermanagement von Netzwerkschnittstellen vereinfacht werden kann. Netzwerkschnittstellen können gemäss QoS Bedingungen (QoS: Quality of Service) ausgewählt werden. Netzwerkschnittstellen können abhängig von Applikationen oder vom Status von Applikationen zugewiesen werden. So kann beispielsweise eine Applikation mit einem hohen Bandbreitenbedarf auf eine Netzwerkschnittstelle mit einer hohen verfügbaren Bandbreite geführt werden.

In einer Ausführungsvariante bezieht sich der Identifikator auf den public key Teil eines auf dem Kommunikationsknoten abgespeicherten public key/private key Paares. Ein solches Verfahren hat insbesondere den Vorteil, dass bekannte Methoden zur gesicherten Identifikation eines Kommunikationsknotens verwendet werden können. So kann beispielsweise mittels eines Challenge-Response Verfahrens die Identität des Kommunikationsknotens gesichert überprüft werden. Dadurch kann beispielsweise die Authentifizierung von Kommunikationspartnern, ein authentifizierter Handover und/oder eine Verschlüsselung der Datenkommunikation gewährleistet werden.

In einer weiteren Ausführungsvariante wird die Netzwerkschnittstellentabelle mit den verfügbaren Netzwerkschnittstellen dynamisch überprüft und nachgeführt, wobei gegebenenfalls die mindestens einen IP-Adressen der Netzwerkschnittstellen in der Identifikatorentabelle sowie die Anbindung von verfügbaren Netzwerkschnittstellen an die virtuelle Schnittstelle nachgeführt werden. Eine dynamische Überprüfung der verfügbaren Netzwerkschnittstellen kann beispielsweise periodisch ausgelöst werden, durch einen Benutzerbefehl ausgelöst werden oder durch irgendeinen anderen Trigger ausgelöst werden. Ein solches Verfahren hat den Vorteil, dass die Zuordnung zwischen dem Identifikator und den verfügbaren IP-Adressen in der Identifikatorentabelle ständig aktuell ist.

In einer anderen Ausführungsvariante wird die dynamische Überprüfung der Netzwerkschnittstellentabelle durch irgendeinen Trigger, wie beispielsweise dem Wechsel der Verfügbarkeit einer Netzwerkschnittstelle, dem Wechsel des der Netzwerkschnittstelle entsprechenden Netzwerks oder einen durch eine Applikation des Kommunikationsknotens erzeugten Triggers, ausgelöst. Ein solches Verfahren hat insbesondere den Vorteil, dass die Netzwerkschnittstellentabelle beispielsweise bei einer Änderung der Ausstattung oder bei einer Änderung von Funktionalitäten des Kommunikationsknotens sofort angepasst werden kann. Der Trigger kann auch durch eine im Netzwerk angebrachte Vorrichtung, wie beispielsweise einer Vorrichtung zur Übertragung einer geeigneten Nachricht an den Kommunikationsknoten, ausgelöst werden. So kann der Betreiber von Kommunikationsnetzwerken beispielsweise Policies erwirken, es kann ein Resourcenmanagement durchgeführt werden oder es können QoS Bedingungen erfüllt werden. Der Trigger kann auch durch eine am Kommunikationsknoten angebrachte Vorrichtung oder durch ein im Kommunikationsknoten ablaufendes Softwaremodul ausgelöst werden. So kann beispielsweise durch eine Applikation oder durch ein TCP Stack beispielsweise aufgrund eines hohen Datenvolumens die Überprüfung nach verfügbaren Netzwerkschnittstellen dynamisch ausgelöst werden. Eine solche dynamische Überprüfung kann beispielsweise auch zeitlich verzögert ausgelöst werden, indem beispielsweise durch in den Kommunikationsnetzwerken angebrachten Vorrichtungen eine zukünftige Verfügbarkeit von Netzwerkschnittstellen geschätzt wird. Eine solche zukünftige Verfügbarkeit von Netzwerkschnittstellen kann auch an Applikationen des Kommunikationsknotens übermittelt werden, sodass z.B. ein grosser Datentransfer erst bei der Verfügbarkeit einer Netzwerkschnittstelle mit einer hohen verfügbaren Bandbreite, wie beispielsweise einer WLAN Netzwerkschnittstelle, ausgelöst wird.

In einer weiteren Ausführungsvariante werden Daten, welche von Applikationen an die virtuelle Schnittstelle übertragen werden, mittels eines Load-Balancing-Moduls auf mindestens zwei Netzwerkschnittstellen verteilt. Ein solches Verfahren hat insbesondere den Vorteil, dass verfügbare Netzwerkschnittstellen optimal genutzt werden können.

In einer anderen Ausführungsvariante erfolgt die Verteilung der Daten auf mindestens zwei Netzwerkschnittstellen basierend auf der Art der Daten, der Applikation, von Quality-of-Service Bedingungen oder von Operator Policies. So kann z.B. der so genannte DC Anteil (DC: Direct Current) einer MPEG Datei (MPEG: Moving Picture Experts Group) über eine Netzwerkschnittstelle mit einer besonders robusten oder sicheren Datenübertragung und der so genannte AC Anteil (AC: Alternating Current) der MPEG Datei kann über ein best-effort Netzwerk mit einer besonders hohen Übertragungsspitzenleistung übertragen werden. Ein solches Verfahren hat insbesondere den Vorteil, dass die Nutzung von Netzwerkschnittstellen optimal an die aktuelle Umgebung des Kommunikationsknotens sowie optimal an die Applikationen des Kommunikationsknotens angepasst werden können.

In einer weiteren Ausführungsvariante werden Daten, welche von Applikationen an die virtuelle Schnittstelle übertragen werden, mittels des Load-Balancing-Moduls mehrfach an mindestens zwei Netzwerkschnittstellen übertragen. Ein solches Verfahren hat insbesondere den Vorteil, dass das Versenden von beispielsweise zeitkritischen Daten gleichzeitig über mehrere Netzwerke erfolgt, wobei damit die Daten mit der höchstmöglichen Zuverlässigkeit übertragen werden. Dadurch können bestmögliche QoS Bedingungen erfüllt werden, indem immer ein Soft-Handover (d.h. ein "make before break") durchgeführt wird, bei dem mehrere Technologien von Netzwerkschnittstellen beteiligt sein können.

In einer anderen Ausführungsvariante werden mittels eines Router-Moduls des Kommunikationsknotens Daten über eine lokale Kommunikationsverbindung zwischen dem Kommunikationsknoten und einem lokalen Kommunikationsknoten übertragen. So kann beispielsweise der Kommunikationsknoten in einem Fahrzeug installiert sein, wobei lokale Kommunikationsknoten wie beispielsweise eine Armbanduhr, eine Playstation, Laptops oder mobile Telefone über lokale Kommunikationsverbindungen mit dem Kommunikationsknoten verbindbar sind und so beispielsweise über verschiedene Netzwerkschnittstellen des Kommunikationsknotens den lokalen Kommunikationsknoten eine unterbrechungsfreie IP-Konnektivität zur Verfügung gestellt wird. Eine solche Ausführungsvariante hat insbesondere den Vorteil, dass mittels einer lokalen Kommunikationsverbindung wie einer Bluetooth-Verbindung auch Applikationen von lokalen Kommunikationsknoten wie einer Armbanduhr über die mehreren Netzwerkschnittstellen optimal an mehrere Netzwerke angeschlossen werden können.

In einer weiteren Ausführungsvariante werden Daten, welche für den Kommunikationsknoten bestimmt sind, zuerst an ein in einem Kommunikationsnetzwerk angebrachtes Zentralmodul gesendet, wobei das Zentralmodul entsprechend bestimmbarer Kriterien ein Load-Balancing über verfügbare Netzwerkschnittstellen des IP-Knotens durchführt. Eine solches Zentralmodul kann beispielsweise ein auf einem Netzwerkserver ablauffähiges Softwaremodul sein, wobei das Zentralmodul über Netzwerkschnittstellen des Netzwerkservers einerseits Daten aus dem Internet empfangen kann und andererseits Daten derart weiterleiten kann, dass die weitergeleiteten Daten über bestimmbare Netzwerkschnittstellen des Kommunikationsknotens empfangen werden können. Ein solches Verfahren hat insbesondere den Vorteil, dass verschiedene verfügbare Netzwerkschnittstellen des Kommunikationsknotens auch für den Empfang von Daten optimal genutzt werden können. Für den Betreiber von Kommunikationsnetzwerken ergibt sich so beispielsweise eine Möglichkeit, um Policies, Resourcen-Management oder Power-Management auf einfache Art und Weise durchführen zu können.

In einer weiteren Ausführungsvariante werden ausgehende Daten in einem Datenpuffer des Kommunikationsknotens zwischengespeichert, wobei das Weitersenden von Daten aus dem Datenpuffer an eine Netzwerkschnittstelle entsprechend der Verfügbarkeit von Netzwerkschnittstellen gesteuert wird. Ein solcher Datenpuffer kann beispielsweise in der virtuellen Schnittstelle oder im Anbindungsmodul angebracht sein. Ein solches Verfahren hat den Vorteil, dass gegenüber den Applikationen des Kommunikationsknotens entsprechend der Grösse des Datenpuffers eine Netzwerkschnittstelle während einem bestimmbaren Zeitintervall ständig verfügbar ist, sodass die Applikationen in einem solchen Zeitintervall ohne Unterbruch Daten senden können, ohne dass die Applikation den Datenstrom unterbrechen muss. So kann gegenüber den Applikationen verborgen werden, dass im Augenblick keine Kommunikation möglich ist und es kann vermieden werden, dass über TCP Mechanismen der Datendurchsatz reduziert wird. Selbstverständlich wird dadurch ein Unterbruch der Kommunikation auch gegenüber Applikationen verborgen, welche nicht TCP verwenden.

### Kurze Beschreibung der Zeichnungen

Nachfolgend werden Ausführungsvarianten der vorliegenden Erfin-dung anhand von Beispielen beschrieben. Die Beispiele der Ausführungen wer-den durch folgende beigelegte Figur illustriert:

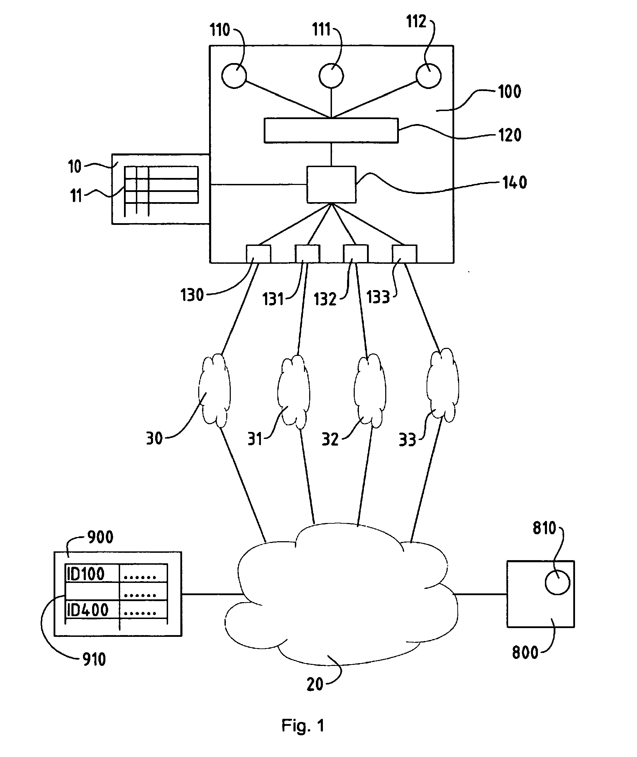

Figur 1 zeigt ein Blockdiagramm mit den einzelnen Bestandteilen eines erfindungsgemässen Verfahrens und Systems für einen Kommunikationsknoten mit mehreren Netzwerkschnittstellen.

### Weg(e) zur Ausführung der Erfindung

In Figur 1 bezieht sich das Bezugszeichen 100 auf einen Kommunikationsknoten. Der Kommunikationsknoten 100 kann irgendein Kommunikationsknoten zur Kommunikation über ein Kommunikationsnetzwerk sein, wie beispielsweise ein mobiles Telefon für die Kommunikation über ein GSM- oder UMTS-Kommunikationsnetzwerk, ein mobiles Notebook zur Kommunikation über ein WLAN-Kommunikationsnetzwerk oder ein festinstallierter Computer zur Kommunikation über ein Ethernet-Kommunikationsnetzwerk. Der Kommunikationsknoten 100 kann sich beispielsweise auch auf einen mobilen Server, einen mobilen Proxy, einen mobilen Router oder irgendeinen anderen mobilen Computer beziehen.

Der Kommunikationsknoten 100 umfasst mehrere Netzwerkschnittstellen 130, 131, 132, 133 zur Kommunikation über verschiedene Kommunikationsnetzwerke 30, 31, 32, 33. In Figur 1 sind vier Netzwerkschnittstellen und vier Kommunikationsnetzwerke gezeichnet. Dem Fachmann ist es jedoch klar, dass sich das erfindungsgemässe Verfahren auf eine beliebige Anzahl von Netzwerkschnittstellen respektive Kommunikationsnetzwerke bezieht. Die Kommunikationsnetzwerke 30, 31, 32, 33 können sich auf irgendwelche Kommunikationsnetzwerke beziehen, beispielsweise auf Kommunikationsnetzwerke unterschiedlicher Technologien, wie auf ein GSM-, auf ein UMTS-, auf ein WLAN- oder auf ein Ethernet-Kommunikationsnetzwerk, oder auf Kommunikationsnetzwerke gleicher Technologien, wie beispielsweise auf ein GSM-Kommunikationsnetzwerk eines ersten Anbieters und auf ein GSM-Kommunikationsnetzwerk eines zweiten Anbieters. Selbstverständlich können sich die Kommunikationsnetzwerke gleicher Technologien nicht nur auf GSM-Kommunikationsnetzwerke beschränken, sondern sich auf WLAN-Kommunikationsnetzwerke, Ethernet-Kommunikationsnetzwerke, UMTS-Kommunikationsnetzwerke oder auf irgendwelche andere Kommunikationsnetzwerke beziehen. Innerhalb solcher Kommunikationsnetzwerke gleicher Technologie können administrative Domänen gebildet werden, wie beispielsweise eine administrative Domäne zur Administration verschiedener IP-Subnetze. Kommunikationsnetzwerke gleicher Technologie können aber auch durch administrative Domänen, wie einer Domäne für Benutzer einer ersten Benutzerklasse und einer Domäne für Benutzer einer zweiten Benutzerklasse, voneinander getrennt sein. Mit einer solchen Trennung in Benutzerklassen können beispielsweise für unterschiedliche Benutzerklassen unterschiedliche Tarife und/oder Dienstqualitäten definiert werden. Selbstverständlich umfassen die Netzwerkschnittstellen 130, 131, 132, 133 die erforderlichen Hardware- und Software-Komponenten wie Busverbindungen, Decoder, Encoder, Modulatoren etc. zur Kommunikation über die Kommunikationsnetzwerke 30,31,32,33.

In Figur 1 bezieht sich das Bezugszeichen 120 auf eine virtuelle Schnittstelle. Die virtuelle Schnittstelle 120 ist beispielsweise als ein auf dem Kommunikationsmodul 100 ablauffähiges Softwaremodul ausgeführt. Die virtuelle Schnittstelle 120 ist durch Applikationen 110, 111, 112 des Kommunikationsknotens 100 zugreifbar. Dabei wird insbesondere sichergestellt, dass sich die virtuelle Schnittstelle 120 aus Sichtweise der Applikationen 110, 111, 112 wie eine reale Netzwerkschnittstelle verhält. Dazu kann gehören, dass die virtuelle Schnittstelle 120 eine virtuelle IP-Adresse, eine virtuelle MAC-Adresse (MAC: Media Access Control) oder irgendein anderes virtuelles Objekt, welches einen Bezug zu einem realen Objekt einer Netzwerkschnittstelle hat, umfasst. Die virtuelle Schnittstelle kann sich logisch auf irgendeinem Layer innerhalb des Kommunikationsprotokollstacks befinden. Die virtuelle Schnittstelle 120 ist vorzugsweise gemäss dem HIP Protokoll ausgeführt, sodass Applikationen mit einem Host Identity Tag und einer Port Nummer auf die virtuelle Schnittstelle zugreifen, sodass Daten zwischen der virtuellen Schnittstelle und der Applikation übertragen werden, und sodass beispielsweise durch die virtuelle Schnittstelle den Applikationen die erfolgreiche Übertragung von Daten signalisiert wird.

In Figur 1 bezieht sich das Bezugszeichen 10 auf ein Konfigurationsmodul und das Bezugszeichen 140 bezieht sich auf ein Anbindungsmodul. Wie in Figur 1 gezeichnet, kann das Konfigurationsmodul 10 am Kommunikationsknoten 100 angebracht sein. Das Konfigurationsmodul 10 kann aber auch über eine Verbindung mit dem Kommunikationsknoten 100 verbindbar sein. Das Konfigurationsmodul 10 kann zudem im Kommunikationsknoten 100 angebracht sein. Das Konfigurationsmodul umfasst Mittel, um den Kommunikationsknoten 100 nach verfügbaren Netzwerkschnittstellen zu überprüfen. Wie in Figur 1 gezeichnet, können sich solche Mittel auf eine Verbindung mit dem Anbindungsmodul 140 beziehen, wobei das Anbindungsmodul 140 wiederum wie in Figur 1 gezeichnet über Mittel zur Verbindung mit den Netzwerkschnittstellen 130, 131, 132, 134 verfügt. Sowohl das Konfigurationsmodul 10 als auch das Anbindungsmodul 140 können je als auf dem Kommunikationsknoten 100 ablauffähige Softwaremodule ausgeführt sein. Das Anbindungsmodul 140 umfasst insbesondere Mittel, um die virtuelle Schnittstelle 120 mit einer oder mit mehreren Netzwerkschnittstellen 130, 131, 132, 133 zu verbinden. Das Konfigurationsmodul 10 umfasst auch Mittel, um einen Identifikator ID100 zu erzeugen oder zu verwalten. Der Identifikator ID100 kann sich beispielsweise auf einen public key Teil eines public key/private key Paares beziehen. Der Identifikator ID100 kann sich auch auf einen gemäss dem Internet Draft "Host Identity Protocol Architecture" definierten HIT (HIT: Host Identity Tag) beziehen. Der Identifikator ID100 kann aber auch auf irgendeine andere Art und Weise gebildet werden. Der Identifikator ID100 wird normalerweise in einem Speicher des Netzwerkknotens abgespeichert. Der Identifikator ID100 kann sich auf den Netzwerkknoten beziehen und dem Netzwerkknoten zugeordnet sein. Der Identifikator ID100 kann sich aber auch auf die virtuelle Schnittstelle 120 beziehen, sodass einem Netzwerkknoten mit mehreren virtuellen Schnittstellen auch mehrere Identifikatoren ID100, ID200, etc. zugeordnet sein können.

In Figur 1 bezieht sich das Bezugszeichen 900 auf eine Zentraleinheit zur Speicherung einer Identifikatorentabelle 910. Wie nachfolgend noch dargestellt wird, kann die Zentraleinheit 900 auch als verteilte Vorrichtung angeordnet sein. Eine solche Zentraleinheit kann beispielsweise als ein auf einem Server ablauffähiges Softwaremodul implementiert sein. Die Zentraleinheit 900 kann sich beispielsweise auf einen DNS-Server beziehen (DNS: Domain Name System). Die Zentraleinheit 900 kann sich aber auch auf eine dedizierte Zentraleinheit beziehen, welche die nachfolgend beschriebenen Funktionen umfasst. Mittels der Zentraleinheit 900 wird in der Identifikatorentabelle 910 mindestens eine IP-Adresse dem Identifikator ID100 zugeordnet abgespeichert. So kann beispielsweise eine Zentraleinheit wie ein DHCP-Server (DHCP: Dynamic Host Configuration Protocol) eines Kommunikationsnetzwerks 30 der Netzwerkschnittstelle 130 dynamisch eine IP-Adresse zuordnen, sobald die Netzwerkschnittstelle 130 physikalisch mit dem Kommunikationsnetzwerk 30 verbunden wird. Eine solche physikalische Verbindung kann sich sowohl auf eine drahtlose Verbindung, wie beispielsweise eine drahtlose Verbindung mit einem WLAN-Kommunikationsnetzwerk, als auch auf eine drahtgebundene Verbindung, wie beispielsweise eine twisted-pair Verbindung mit einem Ethernet-Kommunikationsnetzwerk, beziehen. Sobald der Netzwerkschnittstelle 130 eine IP-Adresse zugeteilt wurde, kann diese IP-Adresse auf der Netzwerkschnittstelle 130 konfiguriert werden und durch das Verbindungsmodul 140 kann die Netzwerkschnittstelle 130 mit der virtuellen Schnittstelle 120 verbunden werden. Dadurch wird eine Kommunikationsverbindung zwischen dem Kommunikationsknoten 100 sowie insbesondere den Applikationen 110, 111, 112 und dem Kommunikationsnetzwerk 30 erstellt. Der Kommunikationsknoten 100 verfügt danach über eine IP-Konnektivität mit dem Kommunikationsnetzwerk 30 und über eine Verbindung zwischen dem Kommunikationsnetzwerk 30 und einem weiteren Kommunikationsnetzwerk 20 beispielsweise zu beliebigen weiteren Kommunikationsnetzwerken wie insbesondere dem Internet. Nachdem die IP-Konnektivität des Kommunikationsknotens 100 erstellt ist, können beispielsweise Einträge der Identifikatorentabelle 910 nachgeführt werden. So kann durch das Verbindungsmodul 140 eine Verbindung mit der Zentraleinheit 900 erstellt werden, wobei mittels einer entsprechenden Übertragung von Daten und Befehlen zwischen dem Verbindungsmodul 140 und der Zentraleinheit 900 die Tabelleneinträge für den Identifikator ID100 des Kommunikationsknotens nachgeführt werden. Diese Tabelleneinträge umfassen insbesondere die aktuell konfigurierten IP-Adressen von Netzwerkschnittstellen 130, 131, 132, 133 des Kommunikationsknotens 100. Analog können Identifikatoren und IP-Adressen beliebiger weiterer Netzwerkknoten abgespeichert werden. Die Identifikatorentabelle 910 besteht somit aus Identifikatoren ID100, ID200, ID400, etc., welche sich auf einen Kommunikationsknoten oder eine virtuelle Schnittstelle des Kommunikationsknotens beziehen, sowie aus je den Identifikatoren ID100, ID200, ID400, etc. zugeordneten IP-Adressen, welche sich auf die Netzwerkschnittstellen 130, 131, 132, 133 der Kommunikationsknoten beziehen. So können beispielsweise dem Identifikator ID100 drei IP-Adressen (z.B. IP1 der Netzwerkschnittstelle 130, IP2 der Netzwerkschnittstelle 131 und IP3 der Netzwerkschnittstelle 132) zugeordnet sein. Damit verfügt der Kommunikationsknoten 100 beispielsweise über IP-Konnektivität der Netzwerkschnittstellen 130, 131 und 130. Mittels des Anbindungsmoduls 140 können eine bestimmbare Anzahl der Netzwerkschnittstellen 130, 131, 132, 133 mit der virtuellen Schnittstelle 120 verbunden werden. Sinnvollerweise werden nur Netzwerkschnittstellen, welche über IP-Konnektivität verfügen, mit der virtuellen Schnittstelle verbunden.

Wie erwähnt, kann die Zentraleinheit 900 auch als verteilte Vorrichtung angeordnet sein. So können Identifikatoren ID100, ID200, ID400 und zugeordnete IP-Addressen in einer verteilten Datenbank abgespeichert sein. Eine solche Datenbank kann hierarchisch, wie beispielsweise im DNS, oder ähnlich wie in einem P2P Netzwerk (P2P: Peer to Peer) in beispielsweise in verteilten Hashtabellen oder ähnlichen verteilten Tabellen abgespeichert sein. Selbst die Zuordnung eines Identifikators ID100 zu einer IP-Adresse kann verteilt abgespeichert sein. So können in einer ersten Tabelle dem Identifikator ID100 eine erste IP-Adresse IP1 und eine zweite IP-Adresse IP2 zugeordnet sein und in einer zweiten Tabelle können dem Identifikator ID100 ebenfalls die zweite IP-Adresse IP2 und eine dritte IP-Adresse IP3 zugeordnet sein. Dies kann den Vorteil haben, dass beispielsweise je nach Standort eines Kommunikationsknotens eine Verbindung von diesem Kommunikationsknoten zum durch den Identifikator ID100 identifizierten Kommunikationsknoten über unterschiedliche Netzwerkschnittstellen dieses Kommunikationsknotens geführt werden kann und dadurch beispielsweise in Bezug auf QoS Bedingungen optimiert werden kann.

In Figur 1 bezieht sich das Bezugszeichen 800 auf irgendeinen zweiten Kommunikationsknoten. Der zweite Kommunikationsknoten 800 kann dabei ein erfindungsgemässer Kommunikationsknoten oder irgendein anderer Kommunikationsknoten sein. Zwischen dem Kommunikationsknoten 100 und dem zweiten Kommunikationsknoten 800 können, wie nachfolgend beschrieben, Kommunikationsverbindungen zur Übertragung von Daten erstellt werden.

Solche Kommunikationsverbindungen haben insbesondere das Ziel, dass Daten zwischen einer Applikation 110 des Kommunikationsknotens 100 und einer zweiten Applikation 810 des zweiten Kommunikationsknotens 800 übermittelt werden können. So kann sich die Applikation 110 beispielsweise auf einen Browser zur Darstellung von HTML Beschreibungsseiten (HTML: Hypertext Markup Language) und die zweite Applikation 810 kann sich auf einen http deamon eines Web Servers beziehen. So müssen über eine Kommunikationsverbindung von der Applikation 110 Anfragedaten an die zweite Applikation 810 übermittelt werden und es müssen über dieselbe oder eine weitere Kommunikationsverbindung Antwortdaten von der zweiten Applikation 810 an die Applikation 110 übermittelt werden.

Die Applikation 110 überträgt dazu die Anfragedaten an die virtuelle Schnittstelle 120. Dabei erscheint die virtuelle Schnittstelle 120 gegenüber der Applikation 110 wie eine normale Netzwerkschnittstelle und umfasst beispielsweise eine virtuelle IP-Adresse sowie eine virtuelle MAC-Adresse. Selbstverständlich umfassen die Anfragedaten einen Identifikator ID800 zur Identifikation des zweiten Kommunikationsknotens 800 oder einer virtuellen Schnittstelle des zweiten Kommunikationsknotens, sowie eine Port Nummer zur Identifikation einer Applikation des zweiten Kommunikationsknotens 800. Selbstverständlich kann statt einer Port Nummer zur Identifikation einer Applikation des zweiten Kommunikationsknotens 800 irgendeine andere Methode verwendet werden, um eine Applikation oder ein Empfangsmodul des zweiten Kommunikationsknotens zu identifizieren. Basierend auf dem Identifikator ID800 wird nun mindestens eine IP-Adresse des zweiten Kommunikationsknotens ermittelt. Dies kann durch einen Lookup in der Identifikatorentabelle erfolgen. Ein solcher Lookup kann durch die virtuelle Schnittstelle 120 oder auch durch das Anbindungsmodul 140 bewerkstelligt werden. Die Anfragedaten werden dann von der virtuellen Schnittstelle 120 an das Anbindungsmodul 140 übermittelt. Gegebenenfalls werden die Anfragedaten ergänzt oder modifiziert, wie beispielsweise des Ersetzens des Identifikators ID800 durch eine entsprechende IP-Adresse. Um den Absender der Anfragedaten festzulegen, können die Anfragedaten zudem eine IP-Adresse des Kommunikationsknotens oder einen Identifikator ID100 umfassen, sowie eine Port Nummer zur Identifikation der Applikation, welche die Anfragedaten gesendet hat. Mittels des Anbindungsmoduls 140 werden die Anfragedaten an mindestens eine der Netzwerkschnittstellen 130, 131, 132, 133 übertragen. Von der entsprechenden mindestens einen Netzwerkschnittstelle werden die Anfragedaten an das zugeordnete Kommunikationsnetzwerk übertragen und mittels üblicher Transportmechanismen beispielsweise über das Kommunikationsnetzwerk 20 an den Kommunikationsknoten 800 übertragen. Die Anfragedaten können entsprechend der Port Nummer an eine zweite Applikation 810 des zweiten Kommunikationsknotens 800 übertragen und von dieser ausgewertet werden. Eine solche Auswertung der Anfragedaten kann dazu führen, dass von der zweiten Applikation 810 Antwortdaten an die Applikation 110 übertragen werden sollen. Solche Antwortdaten können einen Identifikator ID100 des Kommunikationsknotens 100 sowie eine Port Nummer zur Identifikation der Applikation 110 umfassen. Basierend auf dem Identifikator ID100 kann der zweite Kommunikationsknoten beispielsweise mittels eines Lookup in der Identifikatorentabelle 910 eine IP-Adresse des Kommunikationsknotens 100 ermitteln. Der zweite Kommunikationsknoten kann aber diese IP-Adresse auch direkt, beispielsweise peer-to-peer, ermitteln oder die Antwortdaten einfach an die Sendeadresse übermitteln, welche Sendeadresse aus den empfangenen Anfragedaten, beispielsweise durch eine Überprüfung von Daten eines IP-Headers, ermittelt werden kann. Mittels üblicher Transportmechanismen können die Antwortdaten an mindestens eine der Netzwerkschnittstellen 130, 131, 132, 133 übertragen werden, wobei mittels des Anbindungsmoduls 140 die Antwortdaten an die virtuelle Schnittstelle und mittels der virtuellen Schnittstelle sowie basierend auf einer der Applikation 110 entsprechenden Port Nummer die Antwortdaten an die Applikation 110 übertragen werden.

Das Anbindungsmodul 140 kann ein Load-Balancing Modul umfassen. So können bei der Überprüfung des Kommunikationsknotens 100 nach verfügbaren Netzwerkschnittstellen 130, 131, 132, 133 zusätzliche Parameter überprüft. Solche Parameter können sich auf Quality of Service Parameter wie eine maximale Datenrate, die Zuverlässigkeit, die Fehlerrate bei der Übertragung von Datenpaketen, die Netzwerkbelastung oder irgendwelche andere Quality of Service Parameter beziehen. Diese Parameter können sich aber auch auf die Kosten einer Netzwerkverbindung, auf Policies des Operators oder auf irgendwelche andere Parameter beziehen. So kann eine Policy eines Operators eingerichtet sein, dass gewisse Netzwerke für bestimmte Kunden nur an bestimmten Tageszeiten zu einem besonders günstigen Tarif verwendet werden können. Oder die Policy eines Operators kann eingerichtet sein, dass auf einen anderen Verrechnungstarif umgeschaltet wird, sobald die Anzahl Kommunikationsknoten, welche das Kommunikationsnetzwerk des Operators benutzen, eine bestimmte Anzahl oder eine bestimmte gesamte Datenbandbreite überschreitet. Dem Fachmann ist klar, dass eine grosse Vielzahl von anderen Definitionen für solche oder ähnliche Parameter existieren sowie um Netzwerkschnittstellen nach solchen Parametern zu überprüfen. Mittels des Load-Balancing Moduls kann so eine Datenübertragung entsprechend der verfügbaren Netzwerkschnittstellen angepasst werden. So können beispielsweise gleichzeitig eine Netzwerkschnittstelle 130 mit einem GSM-Netzwerk und eine Netzwerkschnittstelle 131 mit einem WLAN-Netzwerk verbunden sein. Ein Benutzer kann nun beispielsweise die Übertragung einer Videodatei von einem Netzwerkserver anfordern. Vor der Übertragung der Videodatei kann es erforderlich sein, dass der Benutzer eine Kreditkartennummer an einen Server zur Freischaltung der Videodatei übermitteln muss. Es kann nun sein, dass die physikalische Anbindung an das WLAN-Netzwerk nur auf einer unverschlüsselten Kommunikationsverbindung basiert. Das Anbindungsmodul 140 kann beispielsweise so eingerichtet sein, dass Daten, welche von einer Applikation an eine Netzwerkschnittstelle übertragen werden sollen, ständig auf eine erforderliche Sicherheits-Stufe überprüft werden. Zudem kann das Anbindungsmodul 140 so eingerichtet sein, dass Daten normalerweise über die Netzwerkschnittstelle mit der grössten Bandbreite übertragen werden. Das Anbindungsmodul 140 kann nun so eingerichtet sein, dass dieses bei der Erkennung von Daten einer höheren Sicherheits-Stufe, wie beispielsweise der Erkennung der Übertragung von Kreditkartendaten, diese Daten über eine Netzwerkschnittstelle 130 einer höheren Sicherheits-Stufe übertragen werden. Selbstverständlich kann der Fachmann aus diesem Beispiel eine grosse Vielzahl entsprechender, ähnlicher oder nahe liegender Vorgehensweisen ableiten, um mittels des Load-Balancing Moduls Daten entsprechend bestimmbarer Parameter über verschiedene verfügbare Netzwerkschnittstellen 130, 131, 132, 133 zu übertragen. Es sei insbesondere erwähnt, dass das Load-Balancing Modul zudem so eingerichtet sein kann, dass die Übertragung von Daten entsprechend der Applikation erfolgt, welche die Daten zur Weiterleitung überträgt. So kann bei der gleichzeitigen Verfügbarkeit einer GSM-Netzwerkschnittstelle und einer UMTS-Netzwerkschnittstelle das Load-Balancing Modul so eingerichtet sein, dass die Übertragung von E-Mail Nachrichten einer E-Mail Applikation immer über die GSM-Netzwerkschnittstelle und die Übertragung von Videodateien einer Video-Applikation immer über die UMTS-Netzwerkschnittstelle erfolgt. Selbstverständlich sind auch hier dem Fachmann eine grosse Vielzahl enstprechender, ähnlicher oder nahe liegender Vorgehensweisen bekannt, um mittels des Load-Balancing Moduls Daten entsprechend der Applikation über verschiedene verfügbare Netzwerkschnittstellen 130, 131, 132, 133 zu übertragen.

Die Module und Komponenten des Kommunikationsknotens 100 können auf mehrere physikalische Geräte verteilt sein. So kann die virtuelle Sc hnittstelle in einem ersten physikalischen Gerät angebracht sein und das Anbindungsmodul kann in einem zweiten physikalischen Gerät angebracht sein. Selbstverständlich kann auch ein erstes physikalisches Gerät wie beispielsweise eine Armbanduhr nur über eine Applikation und über eine physikalische lokale Netzwerkschnittstelle wie eine Bluetooth Netzwerkschnittstelle verfügen und ein zweites physikalisches Gerät wie beispielsweise ein mobiles Telefon kann über eine entsprechende physikalische lokale Netzwerkschnittstelle wie eine Bluetooth Netzwerkschnittstelle verfügen, wobei das zweite physikalische Gerät die erfindungsgemässen Komponenten wie die virtuelle Schnittstelle, das Anbindungsmodul sowie die mehreren Netzwerkschnittstellen umfassen kann. Durch eine solche Trennung ist es insbesondere möglich, dass die im ersten physikalischen Gerät (der Armbanduhr) angebrachten Komponenten besonders gut miniaturisiert und besonders energieeffizient ausgelegt werden können. Das zweite physikalische Gerät kann zudem so eingerichtet sein, dass mehrere erste physikalische Geräte über die lokale Netzwerkschnittstelle angeschlossen werden können, sodass durch das zweite physikalische Gerät ein Router für ein lokales Netzwerk gebildet wird, mit welchem Router über verschiedene Netzwerkschnittstellen des Routers auf verschiedene Netzwerke zugegriffen werden kann. Die Aufteilung einer Architektur bestehend aus einem Konfigurationsmodul 10, einem Anbindungsmodul 140, einer virtuellen Schnittstelle 120, von Applikationen 110, 111, 112 und von Netzwerkschnittstellen 130, 131, 132, 133 kann fast in einer beliebigen Art und Weise erfolgen. Diese Elemente können auf unterschiedlichen Geräten angeordnet werden und können, allenfalls über geeignete zusätzliche Schnittstellen, zu einem erfindungsgemässen Zusammenspiel gebracht werden. So können beispielsweise die Netzwerkschnittstellen 130, 131, 132, 133 auf einem Gerät und das Konfigurationsmodul 10, das Anbindungsmodul 140, die virtuelle Schnittstelle 120 und die Applikationen 110, 111, 112 auf einem anderen Gerät angeordnet sein. Oder es können beispielsweise die Netzwerkschnittstellen 130, 131, 132, 133 auf einem Gerät, das Konfigurationsmodul 10 und das Anbindungsmodul 140 auf einem zweiten Gerät sowie die virtuelle Schnittstelle 120 und die Applikationen 110, 111, 112 auf einem dritten Gerät angeordnet sein.

## Patentansprüche

1. Verfahren für einen Kommunikationsknoten (100) mit mehreren Netzwerkschnittstellen, wobei auf dem Kommunikationsknoten (100) eine virtuelle Schnittstelle (120) konfiguriert wird, wobei die virtuelle Schnittstelle (120) von auf dem Kommunikationsknoten ausführbaren Applikationen (110, 111, 112) zugreifbar ist,
wobei ein Konfigurationsmodul (10) einen Identifikator (ID100) generiert, welcher dem Kommunikationsknoten (100) zugeordnet ist, wobei der Identifikator (ID100) in einer Identifikatorentabelle (910) abgespeichert wird, dass das Konfigurationsmodul (10) den Kommunikationsknoten (100) nach verfügbaren Netzwerkschnittstellen (130, 131, 132, 133) überprüft und eine Netzwerkschnittstellentabelle (11) mit den verfügbaren Netzwerkschnittstellen erstellt, wobei von einer verfügbaren Netzwerkschnittstelle (130, 131, 132, 133) mindestens eine IP-Adresse in der Identifikatorentabelle (910) dem Identifikator (ID100) zugeordnet abgespeichert wird, und
wobei ein Anbindungsmodul (140) basierend auf der Netzwerkschnittstellentabelle (11) mindestens eine der verfügbaren Netzwerkschnittstellen (130, 131, 132, 133) an die virtuelle Schnittstelle anbindet, **dadurch gekennzeichnet,**
**dass** ausgehende Daten in einem Datenpuffer des Kommunikationsknotens zwischengespeichert werden, wobei das Weitersenden von Daten aus dem Datenpuffer an eine Netzwerkschnittstelle entsprechend der Verfügbarkeit von Netzwerkschnittstellen gesteuert wird.

2. Verfahren nach Anspruch 1, **dadurch gekennzeichnet, dass** sich der Identifikator auf den public key Teil eines auf dem Kommunikationsknoten abgespeicherten public key/private key Paares bezieht.

3. Verfahren nach einem der Ansprüche 1 bis 2, **dadurch gekennzeichnet, dass** die Netzwerkschnittstellentabelle mit den verfügbaren Netzwerkschnittstellen dynamisch überprüft und nachgeführt wird, wobei gegebenenfalls die mindestens einen IP-Adressen der Netzwerkschnittstellen in der Identifikatorentabelle sowie die Anbindung von verfügbaren Netzwerkschnittstellen an die virtuelle Schnittstelle nachgeführt werden.

4. Verfahren nach Anspruch 3, **dadurch gekennzeichnet, dass** die dynamische Überprüfung der Netzwerkschnittstellentabelle durch irgendeinen Trigger, wie beispielsweise dem Wechsel der Verfügbarkeit einer Netzwerkschnittstelle, dem Wechsel des der Netzwerkschnittstelle entsprechenden Netzwerks oder einen durch eine Applikation des Kommunikationsknotens erzeugten Triggers, ausgelöst wird.

5. Verfahren nach einem der Ansprüche 1 bis 4, **dadurch gekennzeichnet, dass** Daten, welche von Applikationen an die virtuelle Schnittstelle übertragen werden, mittels eines Load-Balancing-Moduls auf mindestens zwei Netzwerkschnittstellen verteilt werden.

6. Verfahren nach Anspruch 5, **dadurch gekennzeichnet, dass** die Verteilung der Daten auf mindestens zwei Netzwerkschnittstellen basierend auf der Art der Daten, der Applikation, von Quality-of-Service Bedingungen oder von Operator Policies erfolgt.

7. Verfahren nach einem der Ansprüche 5 bis 6, **dadurch gekennzeichnet, dass** Daten, welche von Applikationen an die virtuelle Schnittstelle übertragen werden, mittels des Load-Balancing-Moduls mehrfach an mindestens zwei Netzwerkschnittstellen übertragen werden.

8. Verfahren nach einem der Ansprüche 1 bis 7, **dadurch gekennzeichnet, dass** mittels eines Router-Moduls des Kommunikationsknotens Daten über eine lokale Kommunikationsverbindung zwischen dem Kommunikationsknoten und einem lokalen Kommunikationsknoten übertragen werden.

9. Verfahren nach einem der Ansprüche 5 bis 8, **dadurch gekennzeichnet, dass** Daten, welche für den Kommunikationsknoten bestimmt sind, zuerst an ein in einem Kommunikationsnetzwerk (20) angebrachtes Zentralmodul gesendet werden, wobei das Zentralmodul entsprechend bestimmbarer Kriterien ein Load-Balancing über verfügbare Netzwerkschnittstellen des IP-Knotens durchführt.

10. System mit einem Kommunikationsknoten (100), wobei der Kommunikationsknoten (100) mehrere Netzwerkschnittstellen (130, 131, 132, 133) umfasst, wobei auf dem Kommunikationsknoten (100) eine virtuelle Schnittstelle (120) angebracht ist, wobei die virtuelle Schnittstelle (120) von auf dem Kommunikationsknoten ausführbaren Applikationen (110, 111, 112) zugreifbar ist,
wobei ein Konfigurationsmodul (10) eingerichtet ist, um einen Identifikator (ID100) zu generieren, welcher Identifikator (ID100) dem Kommunikationsknoten (100) zugeordnet ist, und welcher Identifikator (ID100) in einer Identifikatorentabelle (910) abspeicherbar ist,
wobei das Konfigurationsmodul (10) eingerichtet ist, um den Kommunikationsknoten (100) nach verfügbaren Netzwerkschnittstellen (130, 131, 132, 133) zu überprüfen und eine Netzwerkschnittstellentabelle (11) mit den verfügbaren Netzwerkschnittstellen zu erstellen, wobei von einer verfügbaren Netzwerkschnittstelle (130, 131, 132, 133) mindestens eine IP-Adresse in der Identifikatorentabelle (910) dem Identifikator (ID100) zugeordnet abspeicherbar ist, und
wobei ein Anbindungsmodul (140) eingerichtet ist, um basierend auf der Netzwerkschnittstellentabelle (11) mindestens eine der verfügbaren Netzwerkschnittstellen (130, 131, 132, 133) an die virtuelle Schnittstelle anzubinden, **dadurch gekennzeichnet,**
**dass** ausgehende Daten in einem Datenpuffer des Kommunikationsknotens zwischenspeicherbar sind, wobei das Weitersenden von Daten aus dem Datenpuffer an eine Netzwerkschnittstelle entsprechend der Verfügbarkeit von Netzwerkschnittstellen steuerbar ist.

11. System nach Anspruch 10, **dadurch gekennzeichnet, dass** der Identifikator aus dem public key Teil eines auf dem Kommunikationsknoten abgespeicherten public key/private key Paares besteht.

12. System nach einem der Ansprüche 10 bis 11, **dadurch gekennzeichnet, dass** die Netzwerkschnittstellentabelle mit den verfügbaren Netzwerkschnittstellen dynamisch überprüfbar und nachführbar ist, wobei gegebenenfalls die mindestens einen IP-Adressen der Netzwerkschnittstellen in der Identifikatorentabelle sowie die Anbindung von verfügbaren Netzwerkschnittstellen an die virtuelle Schnittstelle nachführbar ist.

13. System nach Anspruch 12, **dadurch gekennzeichnet, dass** die dynamische Überprüfung der Netzwerkschnittstellentabelle durch irgendeinen Trigger, wie beispielsweise dem Wechsel der Verfügbarkeit einer Netzwerkschnittstelle, dem Wechsel des der Netzwerkschnittstelle entsprechenden Netzwerks oder einen durch eine Applikation des Kommunikationsknotens erzeugten Triggers, auslösbar ist.

14. System nach einem der Ansprüche 10 bis 13, **dadurch gekennzeichnet, dass** Daten von den Applikationen an die virtuelle Schnittstelle übertragbar sind, wobei die Daten mittels eines Load-Balancing-Moduls auf mindestens zwei Netzwerkschnittstellen verteilbar sind.

15. System nach Anspruch 14, **dadurch gekennzeichnet, dass** die Verteilung der Daten auf mindestens zwei Netzwerkschnittstellen auf der Art der Daten, der Applikation, von Quality-of-Service Bedingungen oder von Operator Policies basiert.

16. System nach einem der Ansprüche 14 bis 15, **dadurch gekennzeichnet, dass** Daten, welche von Applikationen an die virtuelle Schnittstelle übertragbar sind, mittels des Load-Balancing-Moduls mehrfach an mindestens zwei Netzwerkschnittstellen übertragbar sind.

17. System nach einem der Ansprüche 10 bis 16, **dadurch gekennzeichnet, dass** mittels eines Router-Moduls des Kommunikationsknotens Daten über eine lokale Kommunikationsverbindung zwischen dem Kommunikationsknoten und einem lokalen Kommunikationsknoten übertragbar sind.

18. System nach einem der Ansprüche 14 bis 17, **dadurch gekennzeichnet, dass** Daten, welche für den Kommunikationsknoten bestimmt sind, zuerst an ein in einem Kommunikationsnetzwerk (20) angebrachtes Zentralmodul übertragbar sind, wobei durch das Zentralmodul entsprechend bestimmbarer Kriterien ein Load-Balancing über verfügbare Netzwerkschnittstellen des IP-Knotens durchführbar ist.

## Claims

1. Method for a communication node (100) with a plurality of network interfaces, a virtual interface (120) being configured on the communication node (100), the virtual interface (120) being accessible by applications (110, 111, 112) able to be executed on the communication node,
a configuration module (10) generating an identifier (ID 100), which is assigned to the communication node (100), the identifier (ID 100) being stored in an identifier table (910),
the configuration module (10) checking the communication node (100) for available network interfaces (130, 131, 132, 133), and setting up a network interface table (11) with the available network interfaces, at least one IP address of an available network interface (130, 131, 132, 133) being stored in the identifier table (910) in a way assigned to the identifier (ID 100), and a connection module (140) connecting at least one of the available network interfaces (130, 131, 132, 133) to the virtual interface, based on the network interface table (11), **characterized**
**In that** outgoing data are interim stored in a data buffer of the communication node, the forwarding of data from the data buffer to a network interface being controlled based on the availability of network interfaces.

2. Method according to claim 1, **characterised in that** the identifier relates to the public key portion of a public key/private key pair stored on the communication node.

3. Method according to one of the claims 1 to 2, **characterised in that** the network interface table with the available network interfaces is checked and updated dynamically, if necessary the at least one IP address of the network interface being updated in the identifier table and the connection of available network interfaces to the virtual interface being updated.

4. Method according to claim 3, **characterised in that** the dynamic checking of the network interface table is actuated by any trigger, such as, for example, the change in the availability of a network interface, the change of the network corresponding to the network interface, or a trigger generated by an application of the communication node.

5. Method according to one of the claims 1 to 4, **characterised in that** data transmitted to the virtual interface by applications are distributed on at least two network interfaces by means of a load-balancing module.

6. Method according to claim 5, **characterised in that** the distribution of the data takes place on at least two network interfaces based on the type of data, the application, quality of service requirements or operator policies.

7. Method according to one of the claims 5 to 6, **characterised in that** data, which are transmitted to the virtual interface by applications, are multiply transmitted to at least two network interfaces by means of the load-balancing module.

8. Method according to one of the claims 1 to 7, **characterised in that**, by means of a router module of the communication node, data is transmitted via a local communication connection between the communication node and a local communication node.

9. Method according to one of the claims 5 to 8, **characterised in that** data which are intended for the communication node are first transmitted to a central module set up in a communication network (20), the central module carrying out a load balancing via available network interfaces of the IP node in accordance with definable criteria.

10. System with a communication node (100), the communication node having a plurality of network interfaces (130, 131, 132, 133), a virtual interface (120) being set up on the communication node (100), the virtual interface (120) being accessible by applications (110, 111, 112) able to be executed on the communication node,
a configuration module (10) being set up to generate an identifier (ID 100), which identifier (ID 100) is assigned to the communication node (100), and which identifier is able to be stored in an identifier table (910),
the configuration module (10) being set up to check the communication node (100) for available network interfaces (130, 131, 132, 133) and to set up a network interface table (11) with the available network interfaces, at least one IP address of an available network interface (130, 131, 132, 133) being able to be stored in the identifier table (910) in a way assigned to the identifier (ID 100), and
a connection module (140) being set up to connect at least one of the available network interfaces (130, 131, 132, 133) to the virtual interface based on the network interface table (11), **characterised**
**in that** outgoing data are able to be interim stored in a data buffer of the communication node, the forwarding of data from the data buffer to a network interface being controllable based on the availability of network interfaces.

11. System according to claim 10, **characterised in that** the identifier consists of the public key portion of a public key/private key pair stored on the communication node.

12. System according to one of the claims 10 to 11, **characterised in that** the network interface table with the available network interfaces is able to be checked and updated dynamically, the at least one IP address of the network interfaces being updatable, if necessary, in the identifier table, and the connection of available network interfaces to the virtual interface being updatable..

13. System according to claim 12, **characterised in that** the dynamic checking of the network interface table is able to be actuated by any trigger, such as, for example, the change in the availability of a network interface, the change of the network corresponding to the network interface, or a trigger generated through an application of the communication node.

14. System according to one of the claims 10 to 13, **characterised in that** data are able to be transmitted from the applications to the virtual interface, the data being able to be distributed on at least two network interfaces by means of a load-balancing module.

15. System according to claim 14, **characterised in that** the distribution of the data on at least two network interfaces is based on the type of data, the application, quality-of-service conditions or operator policies.

16. System according to one of the claims 14 to 15, **characterised in that** data, which are able to be transmitted to the virtual interface from applications, are able to be transmitted multiply to at least two network interfaces by means of the load-balancing module.

17. System according to one of the claims 10 to 16, **characterised in that** data are able to be transmitted over a local communication connection between the communication node and a local communication node by means of a router module of the communication node.

18. System according to one of the claims 14 to 17, **characterised in that** data which are intended for the communication node are able to be transmitted first to a central module set up in a communication network (20), a load balancing via available network interfaces of the IP node being able to be carried out by the central module in accordance with definable criteria.

## Revendications

1. Procédé pour un noeud de communication (100) avec plusieurs interfaces, sur le noeud de communication (100) une interface virtuelle (120) étant configurée, l'interface virtuelle (120) étant accessible par des applications (110, 111, 112) exécutables sur le noeud de communication,
un module de configuration (10) générant un identificateur (ID100) qui est associé au noeud de communication (100) l'identificateur (ID100) étant stocké dans un tableau d'identificateur (910) de sorte que le module de configuration (10) vérifie si le noeud de communication (100) dispose d'interfaces de réseau disponibles (130, 131, 132, 133) et établit un tableau d'interfaces de réseau (11) à l'aide des interfaces de réseau disponibles (130, 131, 132, 133), au moins une adresse IP d'une interface réseau disponible est associée à l'identificateur (ID100) et stockée dans le tableau d'identificateur (910) et un module de liaison (140) reliant, en se basant sur le tableau d'interfaces de réseau (11), au moins l'une des interfaces de réseaux disponibles (130, 131, 132, 133) à l' interface virtuelle, **caractérisé en ce que** des données sortantes sont stockées transitoirement dans une mémoire tampon de données du noeud de communication, la transmission de données étant pilotée depuis la mémoire tampon de données à une interface de réseau en fonction de la disponibilité d'interfaces de réseau.

2. Procédé selon la revendication 1, **caractérisé en ce que** l'identificateur se réfère à la partie de clé publique d'une paire de clé privée/clé publique stockée dans le noeud de communication.

3. Procédé selon l'une des revendications 1 à 2, **caractérisé en ce que** les tableaux d'interfaces de réseau sont vérifiés dynamiquement avec les interfaces de réseau disponibles et éventuellement au moins une adresse IP des interfaces de réseau dans le tableau d'identificateurs ainsi que la liaison d'interfaces de réseau disponibles à l'interface virtuelle sont corrigées.

4. Procédé selon la revendication 3, **caractérisé en ce que en ce que** la vérification dynamique du tableau d'interface de réseau peut être déclenchée par n'importe quel Trigger (déclencheur) tel que le changement de la disponibilité d'une interface de réseau, le changement du réseau correspondant à l'interface de réseau ou un trigger déclenché par une application du noeud de communication.

5. Procédé selon l'une des revendications 1 à 4, **caractérisé en ce que** des données qui sont transmises par des applications à l'interface virtuelle sont réparties au moyens d'un module d'équilibrage de charge sur au moins deux interfaces de réseau.

6. Procédé selon la revendication 5, **caractérisé en ce que** la répartition des données sur au moins deux interfaces de réseau s'effectue en se basant sur la nature des données, de l'application, des conditions de qualité de service et des politiques des opérateurs.

7. Procédé selon l'une des revendications 5 à 6, **caractérisé en ce que** des données, qui sont transmises par des applications à l'interface virtuelle, sont réparties au moyens d'un module d'équilibrage de charge sur au moins deux interfaces de réseau.

8. Procédé selon l'une des revendications 1 à 7, **caractérisé en ce qu'**au moyen d'un module routeur du noeud de communication des données sont transmises par une connexion de communication locale entre le noeud de communication et un noeud de communication local.

9. Procédé selon l'une des revendications 5 à 8, **caractérisé en ce que** des données, qui sont destinées à un noeud de communication, sont tout d'abord envoyées à un module central placé dans un réseau de communication (20), le module central exécutant en fonction de critères déterminables un équilibrage de charge sur des interfaces de réseau disponibles du noeud IP.

10. Système avec un noeud de communication (100), le noeud de communication (100) comprenant plusieurs interfaces de réseaux (130, 131, 132, 133), une interface virtuelle (120) étant placée sur le noeud de communication (100), l'interface virtuelle (120) étant accessible par des applications (110, 111, 112) exécutables sur le noeud de communication,
un module de configuration (10) étant agencé pour générer un identificateur (ID100), lequel identificateur (ID100) est associé au noeud de communication (100), et l'identificateur (ID100) étant stockable dans un tableau d'identificateurs (910), le module de configuration (10) étant agencé pour vérifier si le noeud de communication (100) dispose d'interfaces de réseau disponibles (130, 131, 132, 133) et pour établir un tableau d'interfaces de réseau (11) à l'aide des interfaces de réseau disponibles, au moins une adresse IP d'une interface réseau disponible (130, 131, 132, 133) étant associée à l'identificateur (ID100) et stockable dans le tableau d'identificateur (910) et un module de liaison (140) étant agencé pour relier en se basant sur le tableau d'interfaces de réseau (11) au moins l'une des interfaces de réseaux disponibles (130, 131, 132, 133) à l'interface virtuelle, **caractérisé en ce que** des données sortantes sont stockées transitoirement dans une mémoire tampon de données du noeud de communication, la transmission de données étant pilotée depuis la mémoire tampon de données à une interface de réseau en fonction de la disponibilité d'interfaces de réseau.

11. Système selon la revendication 10, **caractérisé en ce que** l'identificateur se compose d'une partie de clé publique d'une paire de clé privée/ clé publique stockée sur le noeud de communication.

12. Système selon l'une des revendications 10 à 11, **caractérisé en ce que** les tableaux d'interfaces de réseau peuvent être vérifiés dynamiquement avec les interfaces de réseau disponibles et éventuellement au moins une adresse IP des interfaces de réseau dans le tableau d'identificateur ainsi que la liaison d'interfaces réseau disponibles à l'interface virtuelle sont corrigeables.

13. Système selon la revendication 12, **caractérisé en ce que** la vérification dynamique du tableau d'interface de réseau peut être déclenchée par n'importe quel Trigger tel que le changement de la disponibilité d'une interface de réseau, le changement du réseau correspondant à l'interface de réseau ou un trigger déclenché par une application du noeud de communication.

14. Système selon l'un des revendications 10 à 13, **caractérisé en ce que** des donnnées qui sont transmises par des applications à l'interface virtuelle, les données pouvant être distribuées au moyen d'un module d'équilibrage de charge sur au moins deux interfaces de réseau.

15. Système selon la revendication 14, **caractérisé en ce que** la répartition des données sur au moins deux interfaces de réseau est basée sur la nature des données, de l'application, des conditions de qualité de service et des politiques des opérateurs.

16. Système selon l'un des revendications 14 à 15, **caractérisé en ce que** des données qui peuvent être transmises par des applications à l'interface virtuelle peuvent être transmises au moyen d'un module d'équilibrage de charge sur au moins deux interfaces de réseau.

17. Système selon l'un des revendications 10 bis 16, **caractérisé en ce qu'**au moyen d'un module routeur du noeud de communication, des données peuvent être transmises par une connexion de communication locale entre le noeud de communication et un noeud de communication local.

18. Système selon l'un des revendications 14 à 17, **caractérisé en ce que** des données qui sont destinées à un noeud de communication peuvent tout d'abord être transmises à un module central placé dans un réseau de communication (20), le module central pouvant exécuter en fonction de critères déterminables un équilibrage de charge sur des interfaces de réseau disponibles du noeud IP.
